# EUROPEAN PATENT SPECIFICATION

(11) **EP 3 067 664 B1**
(45) Date of publication and mention of the grant of the patent: **12.12.2018**
(21) Application number: 14860487.9
(22) Date of filing: 03.09.2014
(51) Int. Cl.: G01D 5/12

(54) **ROTATIONAL ANGLE DETECTING SENSOR**
SENSOR FÜR ROTATIONSWINKELERFASSUNG
CAPTEUR DE DÉTECTION D'ANGLE DE ROTATION

(30) Priority: 05.11.2013 JP 2013229130
(43) Date of publication of application: 14.09.2016
(73) Proprietor: Aisan Kogyo Kabushiki Kaisha, Obu-shi, Aichi 474-8588 (JP)
(72) Inventor: MASE, Makoto, Obu-shi, Aichi 474-8588 (JP)
(74) Representative: Kramer Barske Schmidtchen Patentanwälte PartG mbB
(86) International application number: PCT/JP2014/073163
(87) International publication number: WO 2015/068451

(56) References cited:
- WO-A1-95/18965
- WO-A1-2010/086360
- FR-A1- 2 824 416
- JP-A- H03 209 184
- JP-A- 2003 156 305
- JP-A- 2011 080 994
- JP-A- 2012 516 434
- US-A1- 2012 268 111

## Description

### Technical Field

The present invention relates to a rotation angle detecting sensor for detecting a rotation angle of a rotary member.

### Background Art

JP2012-516434A discloses a position sensor that is a rotation angle detecting sensor. The rotation angle detecting sensor has a magnetism detecting member (sensor module) for detecting a rotation angle of a rotary member, and a resin support member for supporting the magnetism detecting member. The magnetism detecting member includes a main body and a plurality of lead terminals (contact terminals). The main body has an injection-molded portion formed as a flat plate the thickness direction of which is the Z-direction. The lead terminals protrude from one side surface in the Y-direction of the main body. The X-axis, the Y-axis, and the Z-axis are orthogonal to each other.

The support member has a placing portion (reference plate) and a plurality of connection terminals. The main body of the magnetism detecting member is placed on the placing portion. The lead terminals of the magnetism detecting member are connected to the connection terminals. The placing portion is provided with a pair of first engagement support portions (domes) and a second engagement support portion (positioning element). The first engagement support portions are engaged with a pair of first engaged portions (flanges). The first engaged portions are provided on both sides in the X-direction of the main body of the magnetism detecting member, and extend straight in the Y-direction. The second engagement support portion is engaged with a second engaged portion (first end). The second engaged portion is provided on the side portion in the Y-direction of the main body of the magnetism detecting member (the side portion is located opposite to the lead terminal side), and extends straight in the X-direction. The distal ends of the first engagement support portions are deformed through melting. As a result, the first engaged portions are regulated in their movement in the direction opposite to the placing portion.

The second engagement support portion and the connection terminals regulate the relative movement in the Y-direction of the main body of the magnetism detecting member. Thus, when the support member undergoes thermal expansion and contraction in the Y-direction (longitudinal direction), stress is repeatedly applied to the lead terminals. This results in a change in the width dimension of bent portions of the lead terminals. Due to the change in the width dimension, etc., there is a fear of the lead terminals suffering breakage.

FR 2 824 416 A1 relates to a sensor with a carrier board which is arranged in a housing produced at least partly in an injection molding process and with is fitted with electronic, optical, electromechanical and/or opto-electronic components, wherein a region of the carrier board and at least some of the components disposed thereon are arranged in a hollow space formed inside the at least partly injection molded housing.

WO 95/18965 A1 discloses a measuring probe for a gas to be measured with a preferably metal housing, a sensor chip in said housing with the actual sensor at one end and, at the other end an electric terminal electrically connected to the sensor and at least one electrically conductive contact track preferably leading to the sensor, wherein the sensor chip has the actual sensor at one end region facing an inlet in the housing for the measurement gas and the electric and/or mechanical terminal is secured directly or indirectly to the contact track by laser beam welding.

### Disclosure of the Invention

### Problem to be solved by the Invention

There has been a need for a rotation angle detecting sensor in which stress is not easily applied to the lead terminals at the time of thermal expansion or contraction of the support member.

### Means for solving the Problem

The present invention provides rotation angle detecting sensors according to claims 1 and 6. Further embodiments of the present invention are set out in the dependent claims.

According to one aspect of the present invention, a rotation angle detecting sensor has a magnetism detecting member, a plurality of lead terminals, a support member, and a support structure. The magnetism detecting member detects a rotation angle of a rotary member. The plurality of lead terminals extends in the Y-direction from the magnetism detecting member. The support structure supports the magnetism detecting member so as to be movable in the Y-direction with respect to the support member. Thus, when the support member thermally expands or contracts in the Y-direction, the magnetism detecting member can move in the Y-direction with respect to the support member. As a result, the stress applied to the lead terminals may be relieved. Thereby, breakage of the lead terminals is prevented, and the reliability of the rotation angle detecting sensor may be improved.

According to another aspect, the support structure may have an engaged portion and an engagement support portion. The engaged portion is formed on the magnetism detecting member, and extends straight in the Y-direction. The engagement support portion is formed on the support member, and is engaged with the engaged portion while allowing movement in the Y-direction of the engaged portion. According to another aspect, the thickness direction of the magnetism detecting member coincides with the Z-direction orthogonal to the Y-direction. The engaged portion may be formed at both ends of the magnetism detecting member in the X-direction orthogonal to the Y-direction and the Z-direction.

According to another aspect, the rotation angle detecting sensor may have a second magnetism detecting member and a second support structure. The second magnetism detecting member is superimposed on at least a part of the magnetism detecting member. The second support structure supports the second magnetism detecting member while allowing movement in the Y-direction of the second magnetism detecting member with respect to the support member.

According to another aspect, the support structure may have first and second engagement support portions situated on both sides of the magnetism detecting member in the X-direction orthogonal to the Y-direction. According to another aspect, the first engagement support portion may have an elastic member elastically pressing the magnetism detecting member toward the second engagement support portion. As a result, the magnetism detecting member may be elastically held between the first and second engagement support portions. Rattling in the X-direction of the magnetism detecting member may be prevented.

According to another aspect, the first engagement support portion may have a lock claw to be engaged with the magnetism detecting member in the Z-direction orthogonal to the X-direction and the Y-direction. According to another aspect, the first engagement support portion may have an elastic member configured to undergo elastic deformation to allow the lock claw to move toward the magnetism detecting member for the lock claw to be engaged with the magnetism detecting member. Thus, the magnetism detecting member may be easily supported. The lock claw may regulate movement in the Z-direction of the magnetism detecting member.

According to another aspect, the support member may have a placing portion on which the magnetism detecting member is placed. The lock claw may be configured to press the magnetism detecting member toward the placing portion by utilizing the elasticity of the elastic member. Thus, the lock claw may prevent the magnetism detecting member from rattling toward the side opposite the placing portion.

According to another aspect, the support member may have a placing portion on which the magnetism detecting member is placed. The second engagement support portion may be a stationary portion protruding from the placing portion. This makes it possible to form the support member in a simple construction.

According to another aspect, the second engagement support portion may have a retaining surface inclined toward the placing portion and configured to retain the magnetism detecting member. Thus, the retaining surface may prevent the magnetism detecting member from rattling toward the side opposite the placing portion.

### Brief Description of Drawings

FIG. 1 is a perspective view of a rotation angle detecting sensor;
FIG. 2 is a side view of the rotation angle detecting sensor;
FIG. 3 is a plan view of the rotation angle detecting sensor;
FIG. 4 is a cross-sectional view taken along line IV-IV in FIG. 3;
FIG. 5 is an exploded perspective view of the rotation angle detecting sensor;
FIG. 6 is a plan view of a support member;
FIG. 7 is a cross-sectional view taken along line VII-VII in FIG. 6;
FIG. 8 is a cross-sectional view of a support member according to another embodiment;
FIG. 9 is a plan view of a rotation angle detecting sensor according to another embodiment;
FIG. 10 is a cross-sectional view taken along line X-X in FIG. 9;
FIG. 11 is a plan view of a support member of FIG. 9;
FIG. 12 is a cross-sectional view taken along line XII-XII in FIG. 11;
FIG. 13 is a perspective view of a rotation angle detecting sensor according to another embodiment;
FIG. 14 is a side view of the rotation angle detecting sensor of FIG. 13;
FIG. 15 is a plan view of the rotation angle detecting sensor of FIG. 13;
FIG. 16 is a perspective view of a rotation angle detecting sensor according to another embodiment;
FIG. 17 is a plan view of the rotation angle detecting sensor of FIG. 16;
FIG. 18 is a cross-sectional view taken along line XVIII-XVIII in FIG. 17;
FIG. 19 is a plan view of a support member of FIG. 16;
FIG. 20 is a cross-sectional view taken along line XX-XX in FIG. 19;
FIG. 21 is a perspective view of a rotation angle detecting sensor according to another embodiment;
FIG. 22 is a side view of the rotation angle detecting sensor of FIG. 21;
FIG. 23 is a plan view of the rotation angle detecting sensor of FIG. 21;
FIG. 24 is a cross-sectional view taken along line XXIV-XXIV in FIG. 23;
FIG. 25 is an exploded perspective view of the rotation angle detecting sensor of FIG. 21;
FIG. 26 is a perspective view of a rotation angle detecting sensor according to another embodiment;
FIG. 27 is a plan view of the rotation angle detecting sensor of FIG. 26;
FIG. 28 is a cross-sectional view taken along line XXVIII-XXVIII in FIG. 27;
FIG. 29 is a perspective view of a rotation angle detecting sensor according to another embodiment;
FIG. 30 is a side view of the rotation angle detecting sensor of FIG. 29;
FIG. 31 is a plan view of the rotation angle detecting sensor of FIG. 29;
FIG. 32 is an exploded perspective view of the rotation angle detecting sensor of FIG. 29;
FIG. 33 is a perspective view of a rotation angle detecting sensor according to another embodiment; and
FIG. 34 is a plan view of the rotation angle detecting sensor of FIG. 33.

### Embodiments for carrying out the Invention

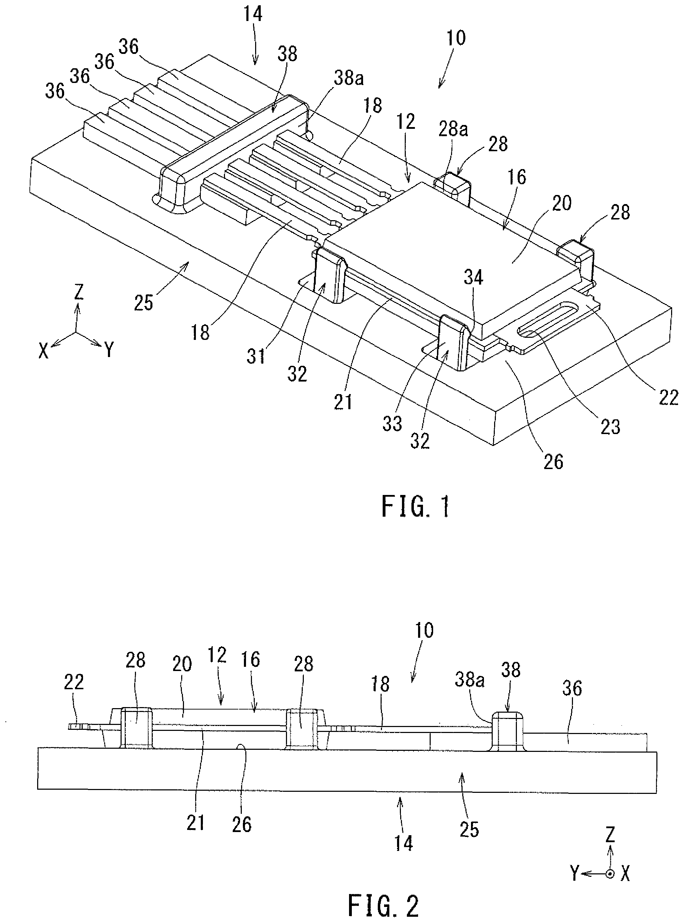

An embodiment of the present invention will be described with reference to FIGS. 1 to 7. In the drawings, there are shown the X-axis, the Y-axis, and the Z-axis, which are orthogonal to each other. The X-direction corresponds to the right-left direction, the Y-direction corresponds to the front-rear direction, and the Z-direction corresponds to the vertical direction.

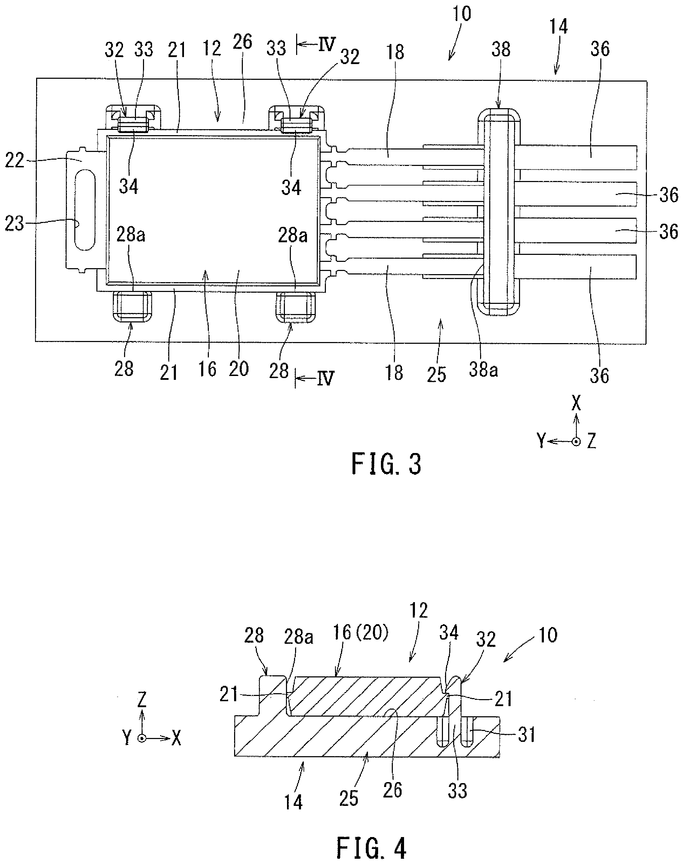

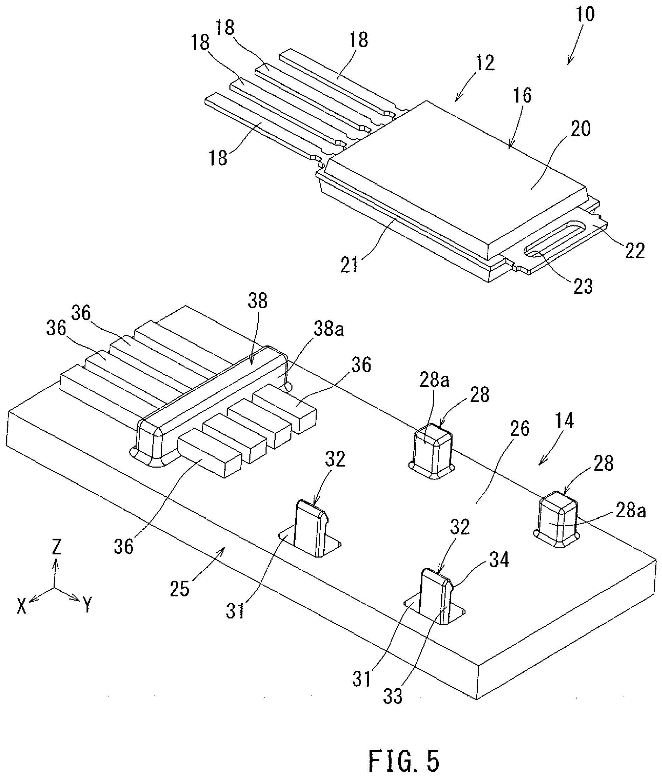

As shown in FIG. 1, a rotation angle detecting sensor 10 includes a sensor IC 12 for detecting the rotation angle of a rotary member (not shown), and a support member 14 that supports the sensor IC 12. As shown in FIG. 5, the sensor IC (magnetism detecting member) 12 is of a type called 2-system output type, 2-output type, etc. The sensor IC 12 includes a sensor main body 16 and a plurality of (e.g., four) lead terminals 18. The sensor main body 16 is directed forwards (to the left in FIGS. 2 and 3). The lead terminals 18 extend backwards. The sensor main body 16 has a resin package 20 formed as a rectangular plate. Two detection elements (not shown), two computation elements (not shown), etc. are molded or embedded in the package 20. The detection elements are, for example, ferromagnetic magnetoresistive elements (MRE). The computation elements are, for example, semiconductor integrated circuit elements. The longitudinal direction of the package 20 coincides with the front-rear direction. The thickness direction of the package 20 coincides with the vertical direction.

The sensor main body 16 has a pair of right and left side flanges 21 protruding from the right and left side surfaces of the package 20 (See FIG. 4). The side flanges (engaged portions) 21 protrude from the central portion in the thickness direction of the sensor main body 16. Both side flanges 21 are mutually symmetrical, and extend in the front-rear direction. The sensor main body 16 has a front flange 22 protruding from the front end surface of the package 20. The front flange 22 protrudes from the central portion in the thickness direction of the sensor main body 16. The front flange 22 extends in the right-left direction. The protruding amount of the front flange 22 is larger than the protruding amount of the side flanges 21. The front flange 22 has an opening 23 that has an oval shape with a longitudinal length in the right-left direction.

The four lead terminals 18 are arranged on the rear end surface of the package 20 in the right-left direction at predetermined intervals so as to be parallel to each other. The lead terminals 18 are formed of a metal exhibiting conductivity, for example, a copper type alloy, and are in the form of band plates. The lead terminals 18 are oriented in the thickness direction, and extend straight in the front-rear direction. The lead terminals 18 are electrically connected to elements (not shown) within the package 20. The lead terminals 18, the side flanges 21, and the front flange 22 are arranged so as to be on the same plane or substantially flush with each other (See FIG. 2). The lead terminals 18 are not bent at any midpoint but are straight.

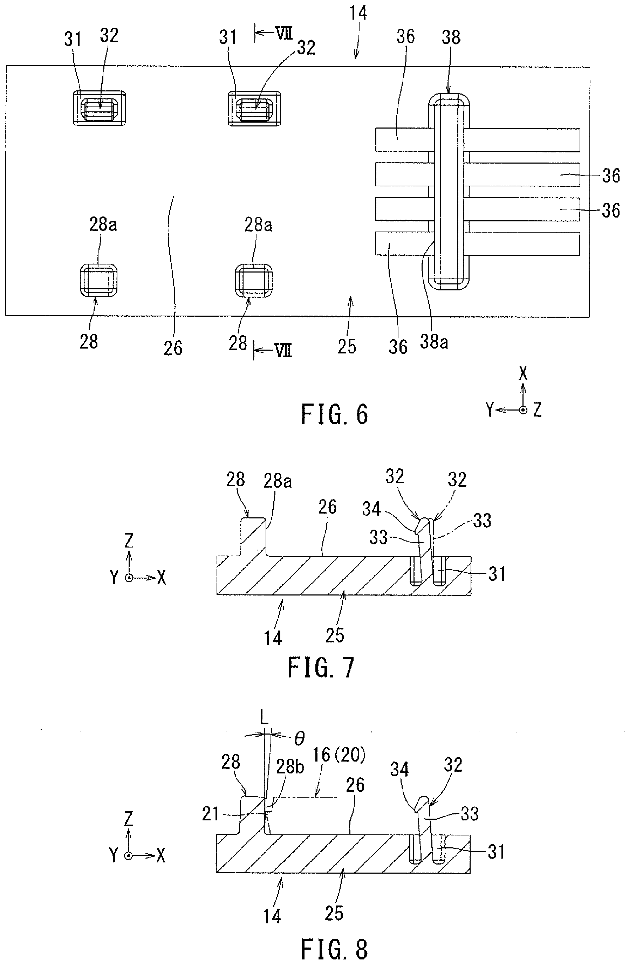

As shown in FIG. 6, the support member 14 has a support stand 25 shaped in a rectangular plate. The longitudinal direction of the support stand 25 is oriented in the front-rear direction. The thickness direction of the support member 14 is oriented in the vertical direction. The support stand 25 is formed of resin. A placing portion 26 on which the sensor main body 16 (See FIG. 5) is placed is arranged at the front portion of the support stand 25. Two front and rear protrusions 28 are integrally formed on the left area of the placing portion 26 (See FIG. 7). The protrusions (engagement support portions) 28 are of a rectangular-prism configuration. Each protrusion 28 has a retaining surface 28a corresponding to the left-hand side flange 21 (See FIG. 4) on the right-hand side thereof. Each retaining surface 28a is orthogonal or substantially orthogonal to the right-left direction.

Two front and rear bottomed recesses 31 (See FIG. 7) are formed in the right area of the placing portion 26. Elastic engagement members 32 are integrally formed on the bottom surfaces of the recesses 31. Each elastic engagement member (engagement support portion) 32 has a vertically extending elastic member 33 and a lock claw 34. The lock claw 34 is formed on the left surface of the distal end (upper end) of each elastic member 33. The thickness direction of the elastic members 33 coincides with the X-direction. Each elastic member 33 is inclined in the free state so that the distal end thereof is situated to the left (toward the protrusion 28) with respect to the proximal end (lower end) thereof. The elastic members 33 are capable of elastic deformation to the right (See the chain double-dashed line 33 in FIG. 7).

A plurality of (e.g., four) terminals 36 are arranged on the rear portion of the support stand 25 at predetermined intervals in the right-left direction so as to be parallel to each other. The terminals (connection terminals) 36 are formed of a metal exhibiting conductivity, such as a copper type alloy. The terminals 36 are band plates, which extend straight in the front-rear direction. The thickness direction of the terminals 36 coincides with the vertical direction. The central portions in the length direction of the terminals 36 are embedded in a retaining wall 38. As a result, the terminals 36 are fixed to the support stand 25. The retaining wall 38 is formed integrally on the support stand 25. The retaining wall 38 is of a rectangular sectional configuration, and extends in the X-direction. The retaining wall 38 has a receiving surface 38a corresponding to the lead terminals 18 on the front side thereof. The receiving surface 38a is a flat surface orthogonal or substantially orthogonal to the Y-axis. Electrical wiring leading to an external control apparatus (not shown) can be connected to the rear ends of the terminals 36.

As shown in FIGS. 1 to 4, the sensor main body 16 is placed on the placing portion 26. The left side flange 21 is caused to abut the retaining surfaces 28a of the front and rear protrusions 28. The right side flange 21 slides while in contact with the opposite surfaces at the distal ends of the front and rear elastic engagement members 32, and causes the elastic engagement members 32 to undergo elastic deformation to the right (See the chain double-dashed line 32 in FIG. 7). The right side flange 21 passes the lock claws 34, and the elastic engagement members 32 are elastically restored to the former state. The lock claws 34 (more specifically, the undercut portions) are engaged with or snap onto the right side flange 21 (See FIG. 4). As a result, the right side flange 21 is prevented from being detached, and is set in position. The lower surface of the package 20 abuts the upper surface of the placing portion 26.

The elastic members 33 are elastically brought into contact with the right side flange 21, and press the right side flange 21 to the left (toward the sensor main body 16). Due to the elasticity of the elastic members 33, the lock claws 34 press the right side flange 21 downwards (toward the placing portion 26). The distal ends of the lead terminals 18 are placed on the rear ends of the terminals 36. The distal ends of the lead terminals 18 abut the receiving surface 38a (See FIG. 2). The receiving surface 38a regulates backward movement of the distal ends of the lead terminals 18. The lead terminals 18 are fixed to the terminals 36 by welding, soldering or the like. As a result, the sensor IC 12 is mounted to the support member 14 to complete the rotation angle detecting sensor 10. After this, in order to prevent short-circuiting because of adhesion of water or conductive foreign matter, potting, coating or the like is preferably effected on the peripheral portion of the sensor IC 12.

A detection element in the sensor main body 16 detects a change in the magnetism generated between a pair of permanent magnets of a rotary member (not shown). A computation element in the sensor main body 16 outputs to an external control apparatus (not shown) a signal corresponding to the change in the magnetism based on a detection signal from the detection element. The control apparatus computes the rotation angle of the rotary member based on the signal output from a computation unit.

The sensor main body 16 is in contact with the package 20. This regulates downward movement of the sensor IC 12 with respect to the support member 14. The lead terminals 18 abut the retaining wall 38. This regulates backward movement of the sensor IC 12 with respect to the support member 14. The left side flange 21 is in contact with the protrusions 28. This regulates leftward movement of the sensor IC 12 with respect to the support member 14. The right side flange 21 is in contact with the elastic members 33. This regulates rightward movement of the sensor IC 12. The lock claws 34 are engaged with the right side flange 21. This regulates upward movement of the sensor IC 12 with respect to the support member 14. The protrusions 28 and the elastic engagement members 32 allow the sensor main body 16 (more specifically, both side flanges 21) to move in the front-rear direction.

The support member 14 (support structure) supports the sensor IC 12 so as to be movable in the Y-direction. Thus, the sensor IC 12 can move in the Y-direction, when the support member 14 thermally expands or contracts in the Y-direction. As a result, the stress applied to the lead terminals 18 is reduced. This prevents breakage of the lead terminals 18. And the reliability of the rotation angle detecting sensor 10 is improved. Positional deviation in the Y-direction of the sensor main body 16 due to thermal expansion/contraction in the Y-direction of the support stand 25 can be prevented. As a result, it is possible to prevent deterioration in the accuracy with which the rotation angle is detected.

The elastic members 33 have elasticity to press the right side flange 21 to the left. Thus, the sensor main body 16 is elastically held between the protrusions 28 and the elastic engagement members 32. As a result, rattling in the X-direction of the sensor main body 16 may be prevented.

Each elastic engagement member 32 has the elastic member 33 and the lock claw 34. Thus, the elastic engagement member 32 snaps onto the right side flange 21. As a result, the support member 14 can easily support the sensor IC 12. The sensor main body 16 can be elastically held between the protrusions 28 and the elastic engagement members 32 due to the elasticity of the elastic members 33. The lock claws 34 engage with the right side flange 21, and regulate the upward movement of the side flange 21.

The lock claws 34 press the right side flange 21 downwardly due to the elasticity of the elastic members 33. Thus, upward rattling of the right side flange 21 may be prevented. The protrusions 28 are formed integrally with the support member 14. Thus, the support member 14 can be formed in a simple construction.

The lead terminals 18 are not bent at any middle point but are straight. Thus, the processing of bending the lead terminals 18 may be omitted. The lead terminals 18 involve no stress concentration generated through bending. The direction in which the sensor IC 12 is mounted to the support member 14 is the same as the direction in which the lead terminals 18 are attached to the terminals 36. Thus, the manufacturing process is simplified, and the manufacturing cost can be reduced.

Instead of the structure shown in FIG. 7, the support member 14 may have the structure shown in FIG. 8. Each of the protrusions 28 shown in FIG. 8 has a retaining surface 28b instead of the retaining surface 28a. The retaining surface 28b is inclined such that the distal end (upper end) is situated to the right. The retaining surface 28b exhibits an inclination angle θ with respect to a reference line L orthogonal to the upper surface of the placing portion 26. The retaining surface 28b is inclined such that the upper portion thereof is situated on the right-hand side of the lower portion thereof. The retaining surface 28b can prevent upward rattling of the right side flange 21.

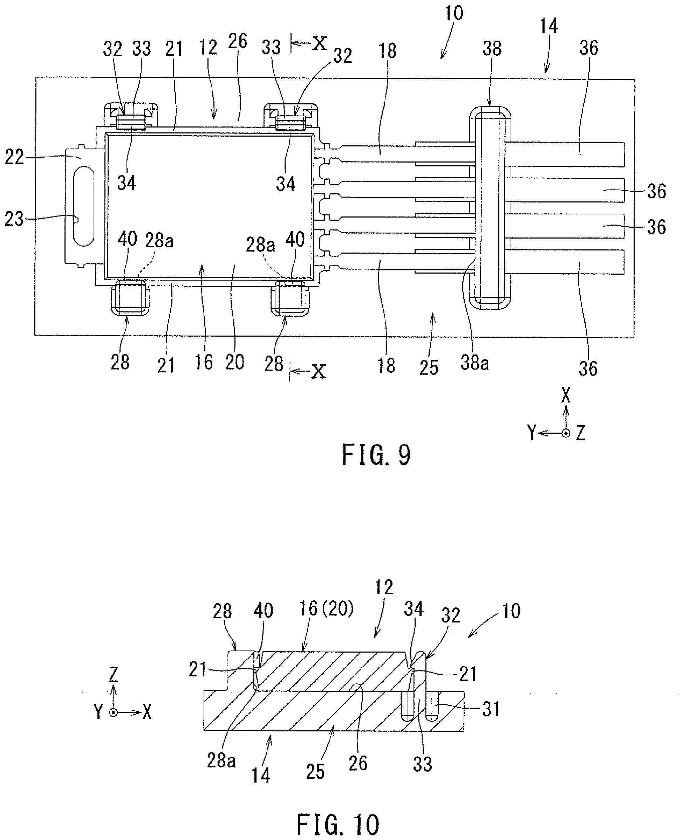

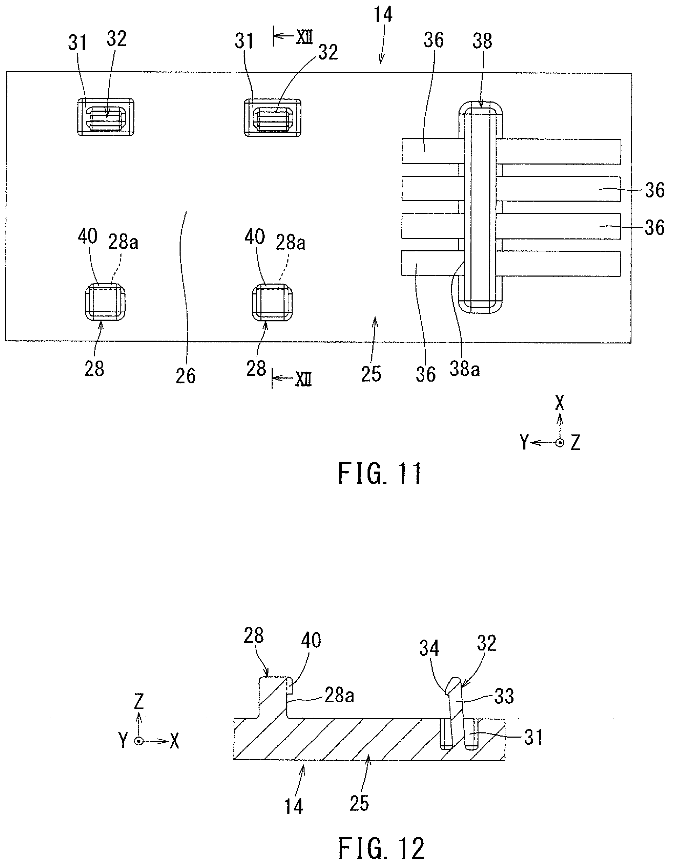

Instead of the structure shown in FIGS. 3 and 4, the support member 14 may have the structure shown in FIGS. 9 to 12. In the support member 14 shown in FIGS. 9 to 12, each of the protrusions 28 has a detachment preventing portion 40. The detachment preventing portion 40 protrudes from the upper portion of the retaining surface 28a of the protrusion 28. The detachment preventing portion 40 is an undercut portion, and is engaged with the left side flange 21. As a result, the left side flange 21 is regulated in its upward movement.

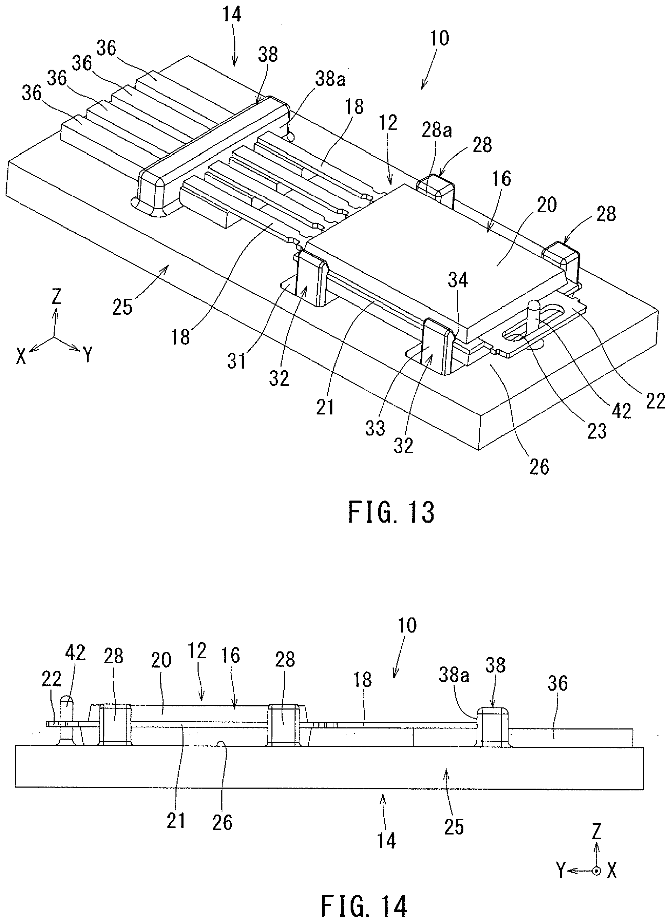

Instead of the structure shown in FIGS. 1 to 3, the support member 14 may have a structure as shown in FIGS. 13 to 15. The support member 14 shown in FIGS. 13 to 15 is provided with a guide pin 42. The guide pin 42 protrudes from the front portion of the placing portion 26 of the support stand 25. The guide pin 42 has an outer diameter smaller than the width of the opening 23 by a predetermined amount. The predetermined amount is an amount which prevents interference of the guide pin 42 with the hole edge of the opening 23 if variations in dimension, thermal expansion/contraction, etc. are taken into account. Thus, the hole edge of the opening 23 does not constrain relative movement in the Y-direction of the guide pin 42. The guide pin 42 is loosely inserted into the opening 23. Thus, the sensor IC 12 can be mounted to the support member 14 while the guide pin 42 roughly guides the sensor IC 12.

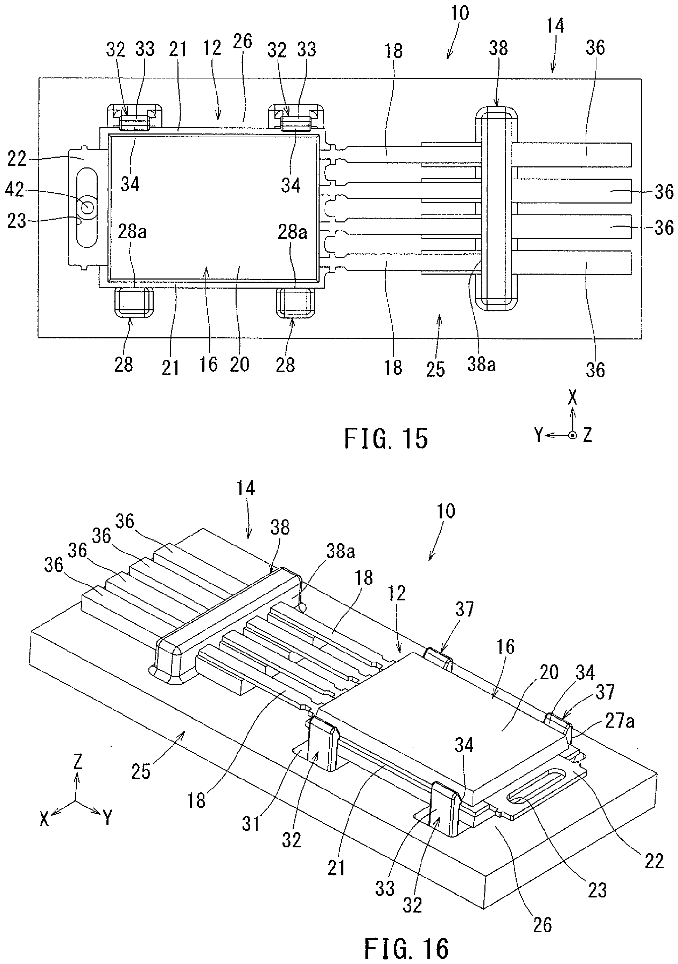

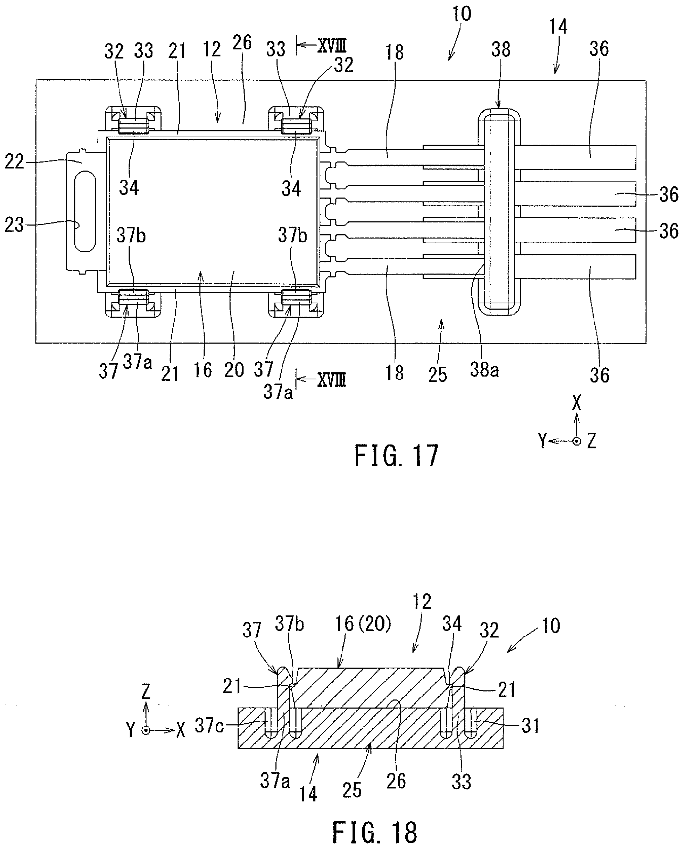

Instead of the structure shown in FIGS. 1 to 7, the support member 14 may have a structure as shown in FIGS. 16 to 20. The support member 14 shown in FIGS. 16 to 20 has elastic engagement members 37 instead of the protrusions shown in FIGS. 1 to 7. The elastic engagement members (engagement support portions) 37 are provided on the left area of the support member 14. The elastic engagement members 37 are formed such that they and the elastic engagement members 32 on the right side are symmetrical, and each of them has an elastic member 37a and a lock claw 37b. Recesses 37c that is similar to the recesses 31 are formed on the left portion of the placing portion 26.

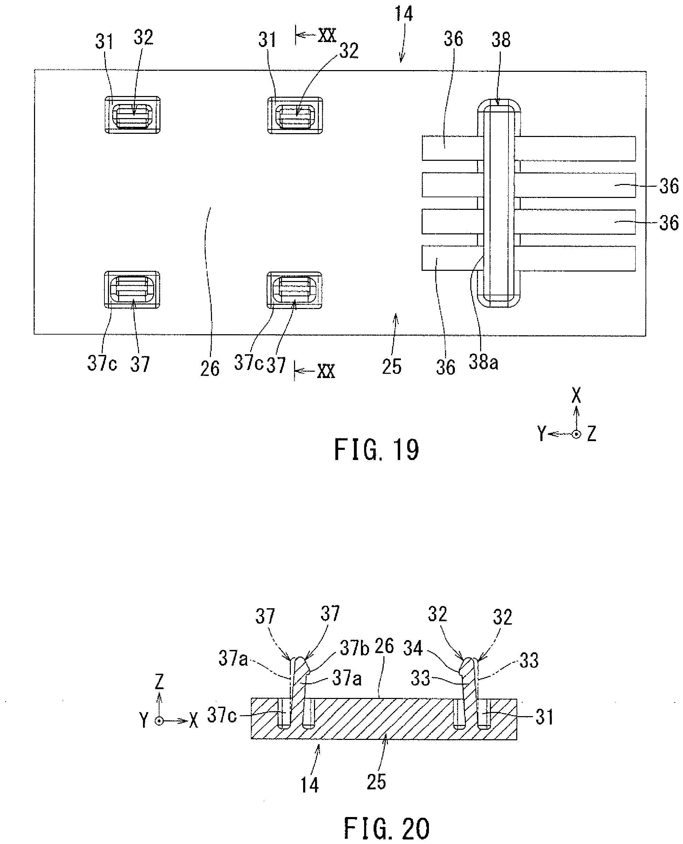

When the sensor main body 16 is placed on the placing portion 26 shown in FIGS. 16 to 18, the side flanges 21 move while in contact with the surfaces, that face to the side flanges 21, of the distal ends (upper ends) of the elastic engagement members 32 and 37. As a result, the elastic engagement members 32 and 37 undergo elastic deformation and are expanded (See the chain double-dashed lines 32 and 37 in FIG. 20). The side flanges 21 pass the lock claws 34 and 37b, and the elastic engagement members 32 and 37 are elastically restored to the former state. The lock claws 34 and 37b are engaged with or snap onto the side flanges 21. As a result, the side flanges 21 are prevented from being detached, or set in position. The elastic members 33 and 37a elastically abut the side flanges 21 to elastically hold the sensor main body 16 between themselves. The lock claws 34 and 37b press the side flanges 21 downwards due to the elasticity of the elastic members 33 and 37a. The elastic engagement members 32 and 37 allow relative movement in the front-rear direction of the sensor main body 16 (more specifically, the side flanges 21).

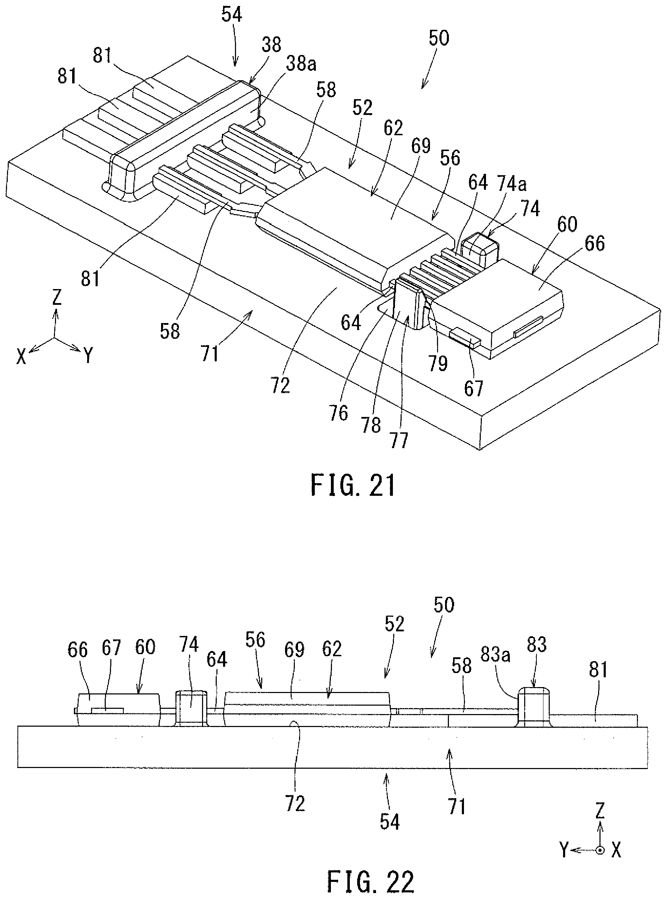

Instead of the structure shown in FIGS. 1 to 7, the rotation angle detecting sensor may have a structure as shown in FIGS. 21 to 25. A rotation angle detecting sensor 50 of FIG. 21 has a sensor IC 52 for detecting the rotation angle of a rotary member (not shown), and a support member 54 that supports the sensor IC 52.

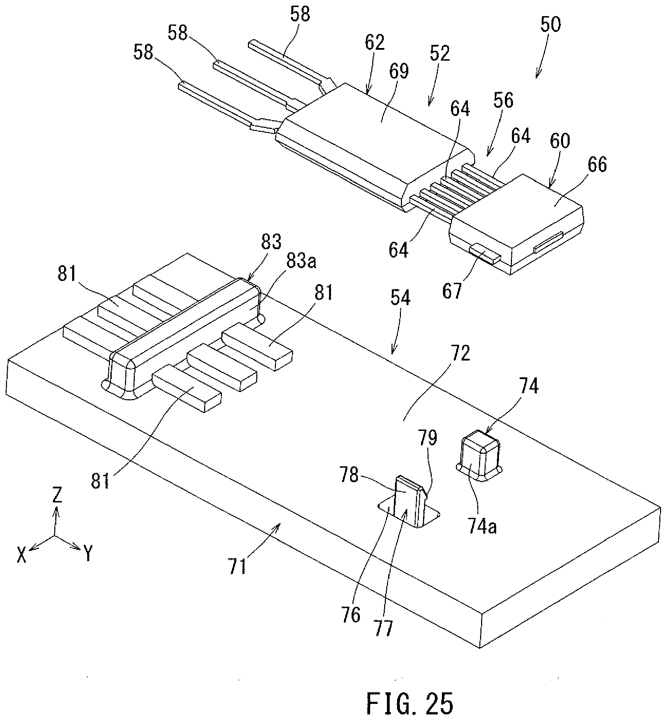

The sensor IC 25 shown in FIG. 25 is of a type called 1-system output type, 1-output type, etc. The sensor IC 52 includes a sensor main body 56 and a plurality of (e.g., three) lead terminals 58. The sensor main body 56 is directed forwards, and the lead terminals 58 extend backwards. The sensor main body 56 includes a sensing unit 60, a computation unit 62, and a plurality of (e.g., six) connection leads 64.

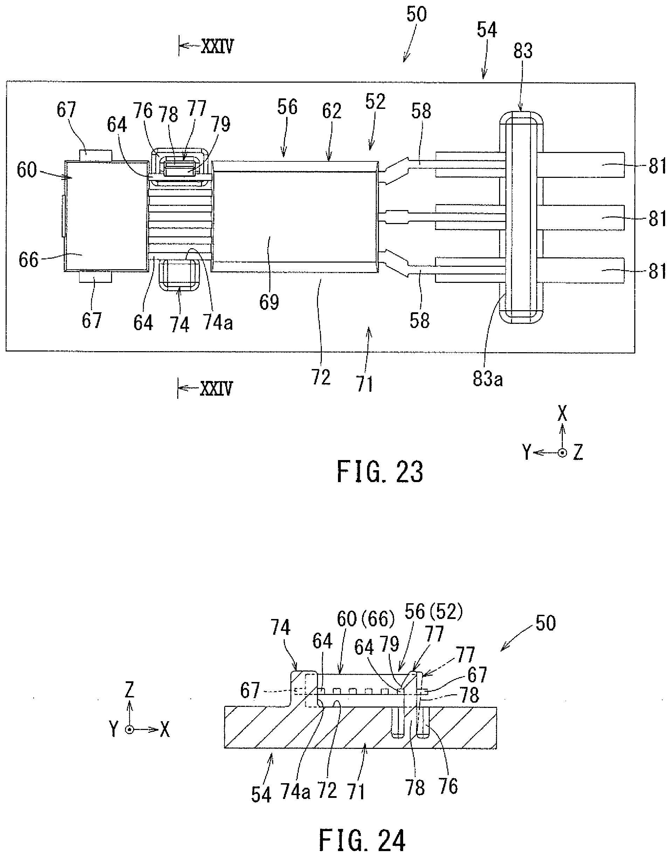

The sensing unit 60 has a package 66 in which a detection element (not shown) is molded, i.e., embedded. The package 66 is formed of resin, and in the form of a rectangular plate. The detection element is, for example, a ferromagnetic magnetoresistive element (MRE). The longitudinal direction of the package 66 coincides with the right-left direction. The thickness direction of the package 66 coincides with the vertical direction. The sensing portion 60 has right and left flanges 67 protruding from the central portions of the right and left surfaces of the package 66 (See FIG. 23). The flanges 67 protrude from the central portions in the thickness direction of the sensor main body 56. Both flanges 67 are mutually symmetrical and extend in the front-rear direction.

The computation unit 62 has a package 69 in which a computation element (not shown) is molded, i.e., embedded. The package 69 is formed of resin as a rectangular plate. The computation element is, for example, a semiconductor integrated circuit element. The longitudinal direction of the package 69 coincides with the front-rear direction. The thickness direction of the package 69 coincides with the vertical direction. The computation unit 62 is arranged at the rear of the sensing unit 60 so as to be side by side therewith. The package 66 and the package 69 have the same or substantially the same thickness, and the same or substantially the same lateral width.

The connection leads 64 extend between the package 66 and the package 69 (See FIG. 23). The connection leads 64 are arranged at predetermined intervals in the right-left direction so as to be parallel to each other. The connection leads 64 are formed of a metal exhibiting conductivity, such as a copper type alloy, and are in the form of band plates. The thickness direction of the connection leads 64 coincides with the vertical direction. The connection leads 64 extend straight in the front-rear direction. The front ends of the connection leads 64 are electrically connected to the detection element (not shown) within the package 66. The rear ends of the connection leads 64 are electrically connected to the computation element (not shown) within the package 69. The connection leads 64 electrically connect the detection element and the computation element to each other and, at the same time, mechanically connect the packages 66 and 69 to each other. The connection leads 64 are used in a straight state without being bent at any midpoint thereof.

Three lead terminals 58 are arranged at the rear surface of the package 69 at predetermined intervals in the right-left direction so as to be parallel to each other. The lead terminals 58 are arranged on the same plane and extend in the front-rear direction. The proximal portions of the lead terminals 58 on both sides extend obliquely toward the proximal portion of the central lead terminal 58 so as to be diminished in interval. The lead terminals 58 are formed of a metal exhibiting conductivity such as a copper type alloy, and are formed as band plates. The thickness direction of the lead terminals 58 coincides with the vertical direction. The lead terminals 58 are electrically connected to the computation element within the package 69. The terminals 58, the connection leads 64, and the flanges 67 are arranged on the same plane or substantially arranged on the same plane (See FIG. 22). The lead terminals 58 extend straight within a plane without being bent at any midpoint.

As shown in FIG. 25, the support member 54 has a support stand 71 in the form of a rectangular plate. The longitudinal direction of the support stand 71 coincides with the front-rear direction. The thickness direction of the support member 54 coincides with the vertical direction. The support stand 71 is formed of resin. A placing portion 72 on which the sensor main body 56 is placed is provided at the front area of the support stand 71. A protrusion 74 is integrally formed on the left portion of the placing portion 72. The protrusion (engagement support portion) 74 is of the same construction as the protrusions 28 of FIG. 5, and has a retaining surface 74a.

A bottomed recess 76 is formed at the right portion of the placing portion 72. An elastic engagement member 77 is integrally formed on the bottom surface of the recess 76. The elastic engagement member (engagement support portion) 77 is of the same construction as the elastic engagement members 32 of FIG. 5, and has an elastic member 78 and a lock claw 79.

A plurality of (e.g., three) terminals 81 are arranged on the rear portion of the support stand 71 at predetermined intervals in the right-left direction so as to be parallel to each other. The terminals (connection terminals) 81 are formed of a metal exhibiting conductivity such as a copper type alloy, and are in the form of band plates. The thickness direction of the terminals 81 coincides with the vertical direction. The terminals 81 extend straight in the front-rear direction. The central portions in the length direction of the terminals 81 are embedded in a retaining wall 83, and are fixed in position. The retaining wall 83 is of the same construction as the retaining wall 38 of FIG. 5. The retaining wall 83 is integrally formed on the support stand 71. The retaining wall 83 has a receiving surface 83a. Electrical wiring leading to an external control apparatus (not shown) can be connected to the rear portions of the terminals 81.

As shown in FIGS. 21 to 23, the sensor main body 56 is placed on the placing portion 72. At this time, the left connection lead 64 (more specifically, the left side thereof) is pressed against the retaining surface 74a of the protrusion 74. The right connection lead 64 (more specifically, the right side thereof) is movable while in contact with the left side of the distal portion (upper portion) of the elastic engagement member 77. The elastic engagement member 77 is elastically deformed to the right (See the chain double-dashed line 77 in FIG. 24). After the right connection lead 64 passes the lock claw 79, the elastic engagement member 77 is elastically restored to the former state. The lock claw 79 is engaged with or snaps onto the right connection lead 64. As a result, the right connection lead 64 is prevented from being detached, and is set in position.

The elastic member 78 elastically abuts the right connection lead 64, and presses the connection lead 64 toward the sensor main body 56. The lock claw 79 presses the right connection lead 64 downwards due to the elasticity of the elastic member 78. The distal portions (rear portions) of the lead terminals 58 are placed on the rear portions of the terminals 81. The distal ends (rear ends) of the lead terminals 58 abut the receiving surface 83a of the retaining wall 83. As a result, backward movement of the lead terminals 58 is regulated. The lead terminals 58 are connected to the terminals 81 by welding, soldering or the like. After the sensor IC 52 has been mounted to the support member 54, potting, coating or the like is effected at the peripheral portion of the sensor IC 52 in order to prevent short-circuiting due to adhesion of water or conductive foreign matter.

The detection element of the sensing unit 60 detects a change in the magnetism generated between a pair of permanent magnets of a rotary member (not shown). The computation element of the computation unit 62 outputs a signal corresponding to the change in the magnetism based on a detection signal from the detection element. The control apparatus computes the rotation angle of the rotary member based on a signal output from the computation unit 62.

The package 66 and the package 69 abut the placing portion 72, so that downward movement of the sensor IC 52 is regulated. The lead terminals 58 abut the retaining wall 83, so that backward movement of the sensor IC 52 is regulated. The left lead 64 abuts the protrusion 74, so that leftward movement of the sensor IC 52 is regulated. The right connection lead 64 abuts the elastic member 78, so that rightward movement of the sensor IC 52 is regulated. The right connection lead 64 is engaged with the lock claw 79, so that upward movement of the sensor IC 52 is regulated. The protrusion 74 and the elastic engagement member 77 allow relative movement in the front-rear direction of the sensor main body 56 (more specifically, the connection leads 64).

Thus, when the support member 54 thermally expands or contracts in the Y-direction, the protrusion 74 and the elastic engagement member 77 can move in the Y-direction with respect to the connection leads 64. As a result, the stress applied to the lead terminals 58 can be reduced. Thus, breakage of the lead terminals 58 is prevented, and the rotation angle detecting sensor 50 is improved in terms of reliability. Positional deviation in the Y-direction of the sensor main body 56 due to thermal expansion/contraction in the Y-direction of the support stand 71 may be prevented. As a result, it is possible to prevent deterioration in the accuracy with which the rotation angle is detected.

The elastic member 78 has elasticity to press the right connection lead 64 toward the sensor main body 56. The sensor main body 56 can be elastically held between the protrusion 74 and the elastic engagement member 77. As a result, rattling in the X-direction of the sensor main body 56 is prevented. The elastic engagement member 77 has the elastic member 78 and the lock claw 79. The lock claw 79 snaps onto the right connection lead 64. Thus, the support member 54 can easily support the sensor IC 52. The lock claw 79 can regulate upward movement of the right connection lead 64.

The lock claw 79 presses the sensor main body 56 downwards via the right connection lead 64 due to the elasticity of the elastic member 78. Thus, upward rattling of the sensor main body 56 may be prevented. The protrusion 74 is formed integrally with the support member 54. Thus, the support member 54 can be simply constructed. The lead terminals 58 are used in a straight state without being bent at any midpoint thereof. Thus, no stress concentration due to bent portions is generated in the lead terminals 58. The direction in which the sensor IC 52 is mounted to the support member 54 is the same as the direction in which the lead terminals 58 are arranged to the terminals 81. As a result, the manufacturing process may be simplified, and production cost may be reduced.

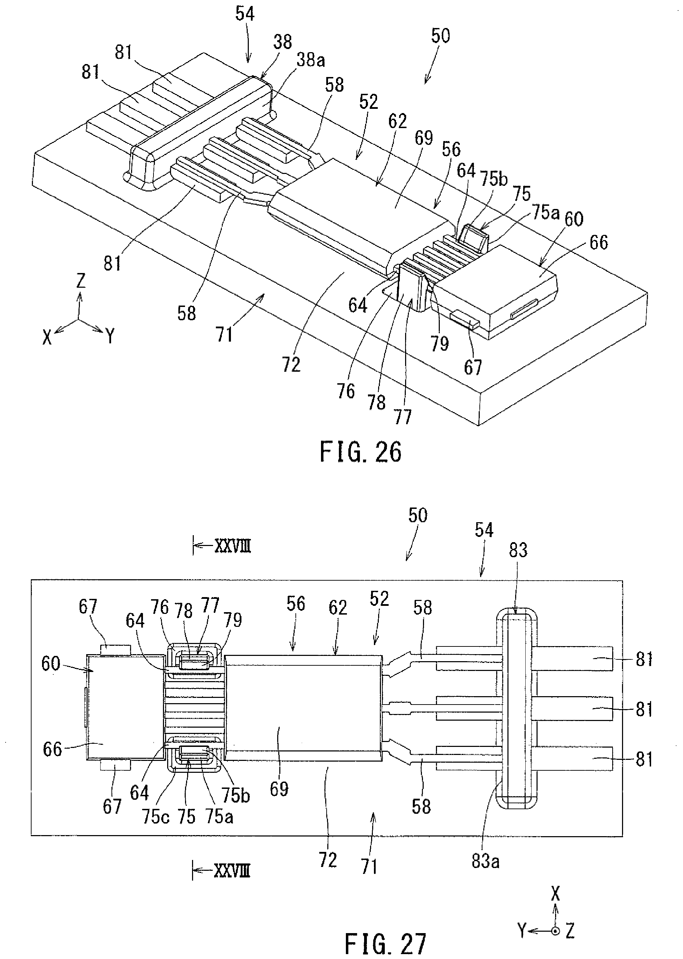

Instead of the structure shown in FIGS. 21 to 25, the support member 54 may have a structure as shown in FIGS. 26 to 28. Instead of the protrusion 74 shown in FIGS. 21 to 25, the support member 54 shown in FIGS. 26 to 28 has an elastic engagement member 75. The elastic engagement member (engagement support portion) 75 is located on the left area of the support member 54. The elastic engagement member 75 is symmetrical with the right elastic engagement member 77, and has an elastic member 75a and a lock claw 75b. A recess 75c that is similar to the recess 76 is formed on the left portion of the placing portion 72.

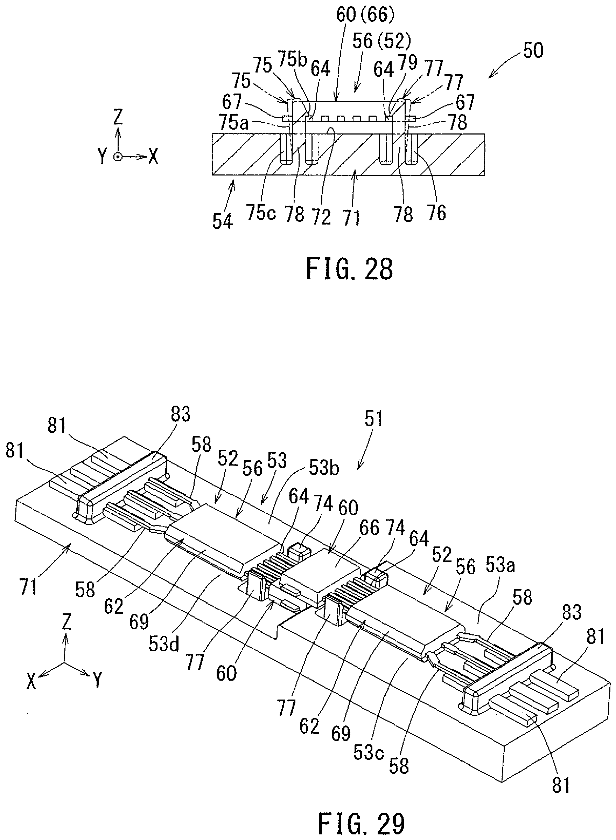

As shown in FIGS. 26 to 28, when placing the sensor main body 56 on the placing portion 72, the connection leads 64 move while in contact with the distal portions (upper portions) of the elastic engagement members 75 and 77. The elastic engagement members 75 and 77 undergo elastic deformation and expand (See the chain double-dashed line in FIG. 28). After the connection leads 64 pass the lock claws 75b and 79, the elastic engagement members 75 and 77 are elastically restored to the former state. The lock claws 75b and 79 are engaged with or snap onto the connection leads 64. As a result, the connection leads 64 are prevented from detachment, and are set in position. The elastic members 75a and 78 elastically abut the connection leads 64, and elastically hold the sensor main body 56. The lock claws 75b and 79 press the connection leads 64 downwards due to the elasticity of the elastic members 75a and 78. The elastic engagement members 75 and 77 allow relative movement in the front-rear direction of the sensor main body 56.

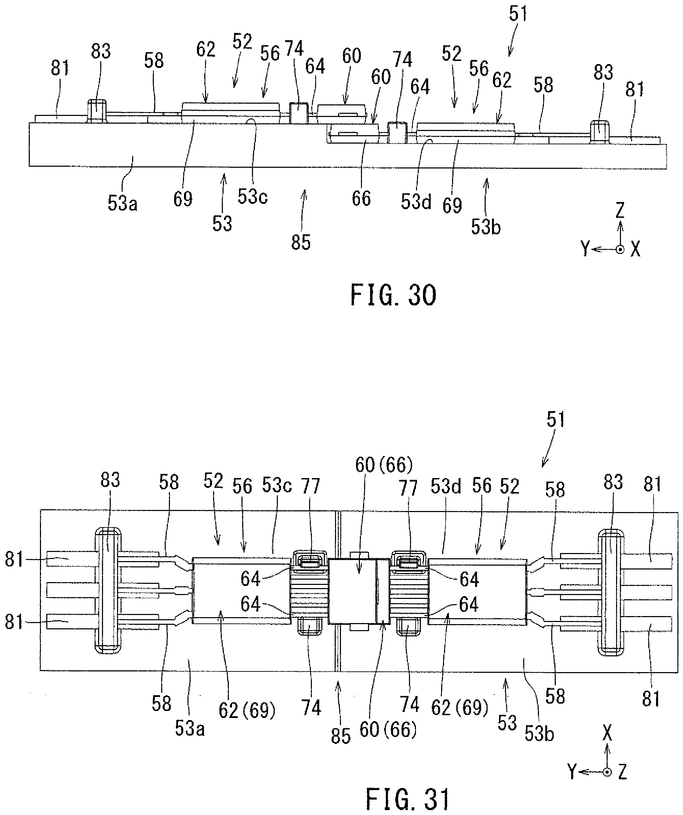

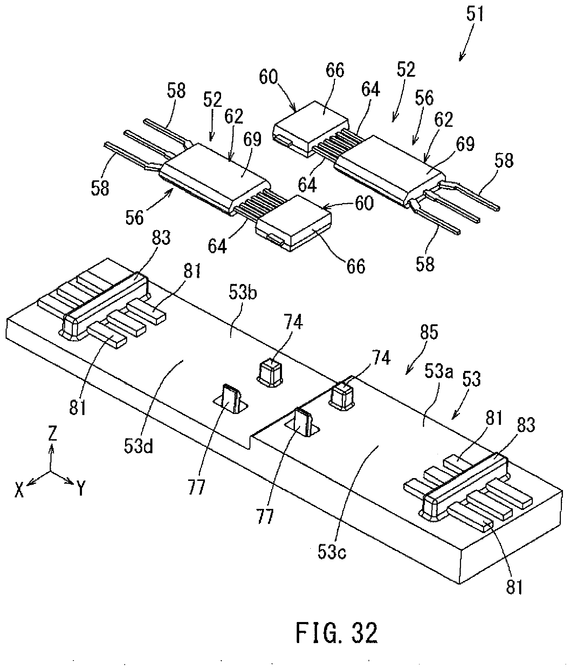

Instead of the structure shown in FIGS. 21 to 25, the rotation angle detecting sensor may have a structure as shown in FIGS. 29 to 32. FIGS. 29 to 32 show a rotation angle detecting sensor 51 equipped with a support member 53 and a plurality of (e.g., two) sensor ICs 52. The support member 53 integrally has a front support stand 53a and a rear support stand 53b. The upper surface of the front support stand 53a (placing portion 53c) is higher than the upper surface of the rear support stand 53b (placing portion 53d) by an amount corresponding to the height of the package 66. Each sensor IC 52 has a sensor main body 56 and a sensing unit (a portion of the main body) 60. The portions of the support member 53 (the protrusions 74, the elastic engagement members 77, the terminals 81, and the retaining walls 83) are arranged such that the sensing units 60 of the sensor ICs 52 are superimposed one upon the other (See FIG. 30). The sensing units 60 are superimposed one upon the other such that the detection centers are aligned with each other.

After the sensor IC 52 has been attached to the rear support stand 53b, the other sensor IC 52 is attached to the front support stand 53a. The sensing units 60 of the sensor ICs 52 are superimposed one upon the other. Each sensor IC 52 is supported so as to be movable in the Y-direction with respect to the support member 53. Thus, the stress applied to the lead terminals 58 due to the thermal expansion/contraction in the Y-direction of the support member 53 is reduced.

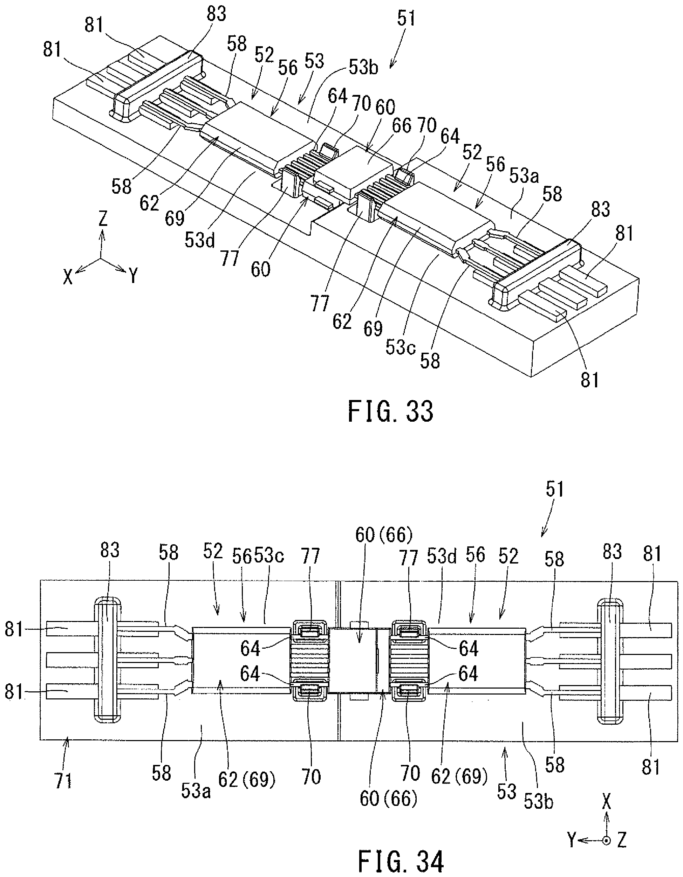

Instead of the structure shown in FIGS. 29 to 32, the rotation angle detecting sensor 51 may have a structure as shown in FIGS. 33 and 34. Instead of the protrusions 74 shown in FIGS. 29 to 32, the support member 53 shown in FIGS. 33 and 34 has elastic engagement members 70. The elastic engagement members 70 are formed in the same manner as the elastic engagement members 77, and are symmetrical with the elastic engagement members 77.

While the embodiments of invention have been described with reference to specific configurations, it will be apparent to those skilled in the art that many alternatives, modifications and variations may be made without departing from the scope of the present invention. Accordingly, embodiments of the present invention are intended to embrace all such alternatives, modifications and variations that may fall within the spirit and scope of the appended claims. Embodiments of the present invention should not be limited to the representative configurations, but may be modified, for example, as described below.

The rotation angle detecting sensor can be utilized to detect the rotation angle of various rotary members. Instead of the sensor IC 12, 52, the rotation angle detecting sensor may have a Hall element, a Hall IC or the like. The lead terminals of the sensor IC may be bent in accordance with the arrangement of the terminals of the support member.

The rotation angle detecting sensor has a support structure that supports the sensor main body 16, 56 so as to allow its movement in the Y-direction with respect to the support member. Instead of the above structure, the support structure may have extension portions extending straight in the Y-direction along both sides in the X-direction of the sensor main body. The extension portions may support the side flanges 21 or the sides of the package 20. As described above, the sensor main body 56 has the connection leads 64 as the engaged portion. Alternatively, the sensor main body 56 may have extension portions extending straight in the Y-direction on both sides in the X-direction. The extension portions may be the sides of the package 66, the flanges 67, or the sides of the package 69 of the computation unit 62.

The support member may have two protrusions 28, 74 as described above, or one or three or more protrusions. The protrusions may be of a columnar configuration as described above, or of a wall-like configuration extending in the Y-direction. The distal portions (upper portions) of the plurality of protrusions may be spaced away from each other or connected with each other.

The support member may have two elastic engagement members as described above, or four elastic engagement members. Alternatively, the support member may have one elastic engagement member, three elastic engagement members, or five or more elastic engagement members. The elastic members may be elongated in the Z-direction as described above, or may be of a wall-like configuration elongated in the Y-direction. As described above, the lock claws may be formed so as to extend along the upper ends of the elastic members. Alternatively, the lock claws may be formed at a part of the upper portions of the elastic members, or may be formed intermittently. Alternatively, the lock claws may be formed at any other portions of the elastic members.

As described above, the support member has engagement support portions on the right and left areas of the sensor main body. The engagement support portions allow movement in the Y-direction of the sensor main body. The structure of the engagement support portions is not restricted to the one described above but may be of some other construction. As described above, the support member may have elastic engagement members on the right and left areas of the sensor main body. The right and left elastic engagement members may be laterally symmetrical or laterally asymmetrical.

As described above, the support member may have elastic engagement members equipped with lock claws. Alternatively, the support member may have elastic engagement members equipped with no lock claws. Instead of the above-described elastic engagement members, the support member may have the above-described protrusions. Alternatively, instead of the above-described protrusions, the support member may have the above-described engagement members. As described above, the lock claws may be of a structure pressing the engaged portion downwardly due to the elasticity of the elastic members, or may be of a structure not pressing the engaged portion downwardly.

## Claims

1. A rotation angle detecting sensor comprising:
a magnetism detecting member configured to detect a rotation angle of a rotary member;
a plurality of lead terminals extending in a Y-direction from the magnetism detecting member;
a support member; and
a support structure configured to support the magnetism detecting member so as to be movable in the Y-direction with respect to the support member,
wherein the support structure comprises first and second engagement support portions situated on both sides of the magnetism detecting member in an X-direction orthogonal to the Y-direction, and
wherein the first engagement support portion comprises an elastic member configured to elastically press the magnetism detecting member toward the second engagement support portion.

2. The rotation angle detecting sensor according to claim 1, wherein the support structure comprises
an engaged portion formed on the magnetism detecting member, and extends straight in the Y-direction; and
an engagement support portion formed on the support member, and is engaged with the engaged portion while allowing movement in the Y-direction of the engaged portion.

3. The rotation angle detecting sensor according to claim 2, wherein:
a thickness direction of the magnetism detecting member coincides with a Z-direction orthogonal to the Y-direction, and
the engaged portion comprises a plurality of engaged portions formed on both ends of the magnetism detecting member in an X-direction orthogonal to the Y-direction and the Z-direction.

4. The rotation angle detecting sensor according to any one of claims 1 to 3, further comprising:
a second magnetism detecting member superimposed on at least a part of the magnetism detecting member; and
a second support structure configured to support the second magnetism detecting member while allowing movement in the Y-direction of the second magnetism detecting member with respect to the support member.

5. The rotation angle detecting sensor according to claim 1, wherein the first engagement support portion comprises a lock claw to be engaged with the magnetism detecting member in a Z-direction orthogonal to the X-direction and the Y-direction.

6. A rotation angle detecting sensor comprising:
a magnetism detecting member configured to detect a rotation angle of a rotary member;
a plurality of lead terminals extending in a Y-direction from the magnetism detecting member;
a support member; and
a support structure configured to support the magnetism detecting member so as to be movable in the Y-direction with respect to the support member,
wherein the support structure comprises first and second engagement support portions situated on both sides of the magnetism detecting member in an X-direction orthogonal to the Y-direction,
wherein the first engagement support portion comprises a lock claw to be engaged with the magnetism detecting member in a Z-direction orthogonal to the X-direction and the Y-direction, and
wherein the first engagement support portion comprises an elastic member configured to undergo elastic deformation to allow the lock claw to move toward the magnetism detecting member for the lock claw to be engaged with the magnetism detecting member.

7. The rotation angle detecting sensor according to claim 6, wherein:
the support member comprises a placing portion on which the magnetism detecting member is placed, and
the lock is configured to press the magnetism detecting member toward the placing portion by utilizing the elasticity of the elastic member.

8. The rotation angle detecting sensor according to any one of claims 1 to 7, wherein:
the support member comprises a placing portion on which the magnetism detecting member is placed, and
the second engagement support portion is a stationary portion protruding from the placing portion.

9. The rotation angle detecting sensor according to claim 8, wherein the second engagement support portion comprises a retaining surface inclined toward the placing portion and configured to retain the magnetism detecting member.

## Patentansprüche

1. Drehwinkel-Ermittlungssensor, enthaltend:
ein Magnetismus-Ermittlungselement, das zum Ermitteln eines Drehwinkels eines Drehelements ausgebildet ist;
eine Vielzahl von Leitungsanschlüssen, die sich in einer Y-Richtung von dem Magnetismus-Ermittlungselement erstrecken;
ein Halteelement; und
eine Haltestruktur, die zum Halten des Magnetismus-Ermittlungselements derart ausgebildet ist, dass sie mit Bezug auf das Halteelement in der Y-Richtung beweglich ist;
wobei die Haltestruktur einen ersten und zweiten Eingriffshaltebereich aufweist, die sich auf beiden Seiten des Magnetismus-Ermittlungselement in einer X-Richtung senkrecht zu der Y-Richtung befinden, und
wobei der erste Eingriffshaltebereich ein elastisches Element .aufweist, das zum elastischen Drücken des Magnetismus-Ermittlungselements in Richtung zu dem zweiten Eingriffshaltebereich ausgebildet ist.

2. Drehwinkel-Ermittlungssensor nach Anspruch 1, wobei die Haltestruktur aufweist
einen eingerasteten Bereich, der auf dem Magnetismus-Ermittlungselement ausgebildet ist, und sich gerade in der Y-Richtung erstreckt; und
einen Eingriffshaltebereich, der auf dem Halteelement ausgebildet ist und der mit dem eingerasteten Bereich in Eingriff ist, während er eine Bewegung des eingerasteten Bereichs in der Y-Richtung ermöglicht.

3. Drehwinkel-Ermittlungssensor nach Anspruch 2, wobei:
eine Dickenrichtung des Magnetismus-Ermittlungselements mit einer Z-Richtung senkrecht zu der Y-Richtung übereinstimmt, und
der eingerastete Bereich eine Vielzahl von eingerasteten Bereichen aufweist, die auf beiden Enden des Magnetismus-Ermittlungselement in einer X-Richtung senkrecht zu der Y-Richtung und der Z-Richtung ausgebildet sind.

4. Drehwinkel-Ermittlungssensor nach einem der Ansprüche 1 bis 3, ferner enthaltend:
ein zweites Magnetismus-Ermittlungselement, das auf wenigstens einem Teil des Magnetismus-Ermittlungselements angeordnet ist; und
eine zweite Haltestruktur, die zum Halten des zweiten Magnetismus-Ermittlungselements ausgebildet ist, während sie eine Bewegung des zweiten Magnetismus-Ermittlungselements in der Y-Richtung mit Bezug auf das Halteelement ermöglicht.

5. Drehwinkel-Ermittlungssensor nach Anspruch 1, wobei der erste Eingriffshaltebereich eine Verriegelungsklaue aufweist, die mit dem Magnetismus-Ermittlungselement in einer Z-Richtung senkrecht zu der X-Richtung und der Y-Richtung einzurasten ist.

6. Drehwinkel-Ermittlungssensor, enthaltend:
ein Magnetismus-Ermittlungselement, das zum Ermitteln eines Drehwinkels eines Drehelements ausgebildet ist;
eine Vielzahl von Leitungsanschlüssen, die sich in einer Y-Richtung von dem Magnetismus-Ermittlungselement erstrecken;
ein Halteelement; und
eine Haltestruktur, die zum Halten des Magnetismus-Ermittlungselements derart ausgebildet ist, dass sie mit Bezug auf das Halteelement in der Y-Richtung beweglich ist;
wobei die Haltestruktur einen ersten und zweiten Eingriffshaltebereich aufweist, die sich auf beiden Seiten des Magnetismus-Ermittlungselement in einer X-Richtung senkrecht zu der Y-Richtung befinden, und
wobei der erste Eingriffshaltebereich eine Verriegelungsklaue aufweist, die mit dem Magnetismus-Ermittlungselement in einer Z-Richtung senkrecht zu der X-Richtung und der Y-Richtung einzurasten ist, und
wobei der erste Eingriffshaltebereich ein elastisches Element aufweist, das zum Erfahren einer elastischen Verformung zum Ermöglichen der Verriegelungsklaue zum Bewegen in Richtung zu dem Magnetismus-Ermittlungselement für die Verriegelungsklaue, die mit dem Magnetismus-Ermittlungselement einzurasten ist, ausgebildet ist.

7. Drehwinkel-Ermittlungssensor nach Anspruch 6, wobei:
ein Halteelement einen Platzierungsbereich aufweist, auf dem das Magnetismus-Ermittlungselement platziert ist, und
das Verriegeln zum Drücken des Magnetismus-Ermittlungselements in Richtung zu dem Platzierungsbereich unter Verwendung der Elastizität des elastischen Elements ausgebildet ist.

8. Drehwinkel-Ermittlungssensor nach einem der Ansprüche 1 bis 7, wobei:
das Halteelement einen Platzierungsbereich aufweist, auf dem das Magnetismus-Ermittlungselement platziert ist, und
der zweite Eingriffshaltebereich ein stationärer Bereich ist, der von dem Platzierungsbereich hervorsteht.

9. Drehwinkel-Ermittlungssensor nach Anspruch 8, wobei der zweite Eingriffshaltebereich eine Befestigungsfläche aufweist, die in Richtung zu dem Platzierungsbereich geneigt ist und zum Befestigen des Magnetismus-Ermittlungselements ausgebildet ist.

## Revendications

1. Capteur de détection d'angle de rotation comprenant :
un élément de détection de magnétisme configuré pour détecter un angle de rotation d'un élément rotatif ;
une pluralité de bornes de connexion s'étendant dans une direction Y à partir de l'élément de détection de magnétisme ;
un élément de support ; et
une structure de support configurée pour supporter l'élément de détection de magnétisme de manière à pouvoir être déplacée dans la direction Y par rapport à l'élément de support,
dans lequel la structure de support comprend des première et seconde parties de support de mise en prise situées des deux côtés de l'élément de détection de magnétisme dans une direction X orthogonale à la direction Y, et
dans lequel la première partie de support de mise en prise comprend un élément élastique configuré pour presser de manière élastique l'élément de détection de magnétisme vers la seconde partie de support de mise en prise.

2. Capteur de détection d'angle de rotation selon la revendication 1, dans lequel la structure de support comprend
une partie en prise formée sur l'élément de détection de magnétisme et s'étendant droit dans la direction Y; et
une partie de support de mise en prise formée sur l'élément de support, et est en prise avec la partie en prise tout en permettant un mouvement dans la direction Y de la partie en prise.

3. Capteur de détection d'angle de rotation selon la revendication 2, dans lequel :
une direction d'épaisseur de l'élément de détection de magnétisme coïncide avec une direction Z orthogonale à la direction Y, et
la partie en prise comprend une pluralité de parties en prise formées aux deux extrémités de l'élément de détection de magnétisme dans une direction X orthogonale à la direction Y et à la direction Z.

4. Capteur de détection d'angle de rotation selon l'une quelconque des revendications 1 à 3, comprenant :
un deuxième élément de détection de magnétisme superposé sur au moins une partie de l'élément de détection de magnétisme ; et
une seconde structure de support configurée pour supporter le second élément de détection de magnétisme tout en permettant un mouvement dans la direction Y du second élément de détection de magnétisme par rapport à l'élément de support.

5. Capteur de détection d'angle de rotation selon la revendication 1, dans lequel la première partie de support de mise en prise comprend une griffe de verrouillage destinée à être mise en prise avec l'élément de détection de magnétisme dans une direction Z orthogonale à la direction X et à la direction Y.

6. Capteur de détection d'angle de rotation comprenant :
un élément de détection de magnétisme configuré pour détecter un angle de rotation d'un élément rotatif;
une pluralité de bornes de connexion s'étendant dans une direction Y à partir de l'élément de détection de magnétisme ;
un élément de support ; et
une structure de support configurée pour supporter l'élément de détection de magnétisme de manière à pouvoir être déplacée dans la direction Y par rapport à l'élément de support,
dans lequel la structure de support comprend des première et seconde parties de support de mise en prise situées des deux côtés de l'élément de détection de magnétisme dans une direction X orthogonale à la direction Y,
dans lequel la première partie de support de mise en prise comprend une griffe de verrouillage destinée à être mise en prise avec l'élément de détection de magnétisme dans une direction Z orthogonale à la direction X et à la direction Y, et
dans lequel la première partie de support de mise en prise comprend un élément élastique configuré pour subir une déformation élastique afin de permettre à la griffe de verrouillage de se déplacer vers l'élément de détection de magnétisme pour que la griffe de verrouillage soit en prise avec l'élément de détection de magnétisme.

7. Capteur de détection d'angle de rotation selon la revendication 6, dans lequel :
l'élément de support comprend une partie de placement sur laquelle est placé l'élément de détection de magnétisme, et
le verrou est configuré pour presser l'élément de détection de magnétisme vers la partie de placement en utilisant l'élasticité de l'élément élastique.

8. Capteur de détection d'angle de rotation selon l'une quelconque des revendications 1 à 7, dans lequel :
l'élément de support comprend une partie de placement sur laquelle l'élément de détection de magnétisme est placé, et
la deuxième partie de support de mise en prise est une partie fixe faisant saillie à partir de la partie de placement.

9. Capteur de détection d'angle de rotation selon la revendication 8, dans lequel la seconde partie de support de mise en prise comprend une surface de retenue inclinée vers la partie de placement et configurée pour retenir l'élément de détection de magnétisme.
